# EUROPEAN PATENT APPLICATION

(11) **EP 4 659 558 A1**
(43) Date of publication of application: **10.12.2025**
(21) Application number: 23919283.4
(22) Date of filing: 18.07.2023
(51) Int. Cl.: A01D 34/00, G05D 1/20

(54) **CONTROL METHOD FOR AUTONOMOUS OPERATION DEVICE, AND AUTONOMOUS OPERATION DEVICE**

(30) Priority: 03.02.2023 CN 202310054122; 20.03.2023 CN 202310299819
(71) Applicant: Zhejiang Sunseeker Industrial Co., Ltd., Jinhua, Zhejiang 321042 (CN)
(72) Inventor: ZHOU, Chang, Jinhua, Zhejiang 321042 (CN); WANG, Zhicheng, Jinhua, Zhejiang 321042 (CN); RAN, Wenlin, Jinhua, Zhejiang 321042 (CN)
(74) Representative: Manna, Sara
(86) International application number: PCT/CN2023/107910
(87) International publication number: WO 2024/159718

(57) **Abstract**

A control method for an autonomous operation device. The method comprises: if an autonomous operation device needs to execute a steering action, determining, according to a slope signal that is sensed by a first sensing unit, whether the slope of a working surface where the autonomous operation device is currently located exceeds a preset slope threshold value; if the slope of the working surface where the autonomous operation device is currently located is greater than the preset slope threshold value, controlling the autonomous operation device to execute the steering action according to a first steering strategy; and if the slope of the working surface where the autonomous operation device is currently located is less than or equal to the preset slope threshold value, controlling the autonomous operation device to execute the steering action according to a second steering strategy. In the method, the slope of a working surface where an autonomous operation device is located is obtained by means of a first sensing unit, and according to different slopes of the working surface where the autonomous operation device is located, the autonomous operation device is controlled to execute steering according to different steering strategies, thereby avoiding skidding and grass grinding caused by direct steering of the autonomous operation device. Further comprised are a non-transitory computer-readable storage medium and an autonomous operation device.

## Description

### CROSS-REFERENCE TO RELATED APPLICATIONS

This patent application claims priority to Chinese Patent Application No. 2023102998191, filed on March 20, 2023 and entitled "CONTROL METHOD FOR AUTONOMOUS OPERATION DEVICE AND AUTONOMOUS OPERATION DEVICE", and Chinese Patent Application No. 2023100541228, filed on February 3, 2023 and entitled "CONTROL METHOD FOR AUTONOMOUS OPERATION DEVICE", which are incorporated herein by reference in their entireties.

### TECHNICAL FIELD

Specific embodiments of the present disclosure relate to the technical field of autonomous operation devices, and in particular, to a control method for an autonomous operation device and an autonomous operation device.

### BACKGROUND

An autonomous operation device with moving blades includes left and right driving wheels. During operation, the two driving wheels drive the autonomous operation device to run back and forth in a working region. When the on-site operation ground is on a slope and a turn is required, one of the left and right driving wheels with a weaker grip on the ground may slip, causing inconsistent walking heights on the left and right sides. This causes wear on the on-site operation ground, and may even cause the autonomous operation device to get stuck, hindering it from walking.

Taking an intelligent lawn mower as an example, the intelligent lawn mower needs to turn when approaching a boundary line of a working region or when encountering an obstacle. When the working region of the intelligent lawn mower is on a flat ground, since the left and right driving wheels have the same grip on the ground, turning may not cause lawn wear. However, if the working region of the intelligent lawn mower is on a slope, one of the left and right driving wheels with a weaker grip on the ground may cause lawn wear, and may even cause the intelligent lawn mower to get stuck, which requires a user to manually adjust the position, or otherwise mowing cannot continue.

Based on the aforementioned technical problems, the applicant proposes the technical solutions of the present disclosure.

### SUMMARY

An object of a specific embodiment of the present disclosure is to provide a control method for an autonomous operation device, which can select a steering strategy based on a slope of a work surface when steering is required, that is, a steering strategy can be specifically set for a work surface of a large slope, thereby avoiding problems such as slipping and grass grinding caused by direct steering of the autonomous operation device on the work surface of the large slope.

In order to achieve the above object, a specific embodiment of the present disclosure provides a control method for an autonomous operation device, where the control method is applied to an autonomous operation device, and the autonomous operation device includes a first sensing unit, and the method includes:
in the case that the autonomous operation device needs to perform a steering action, determining, based on a slope signal sensed by the first sensing unit, whether a slope of a work surface where the autonomous operation device is currently located exceeds a preset slope threshold;
in the case that the slope of the work surface where the autonomous operation device is currently located is greater than the preset slope threshold, controlling the autonomous operation device to perform the steering action according to a first steering strategy; and
in the case that the slope of the work surface where the autonomous operation device is currently located is less than or equal to the preset slope threshold, controlling the autonomous operation device to perform the steering action according to a second steering strategy.

A specific embodiment of the present disclosure further provides an autonomous operation device, configured to perform the method described above.

In an embodiment, controlling the autonomous operation device to perform the steering action according to the first steering strategy includes:
A1, driving the autonomous operation device to steer at a first preset angle, and then driving the autonomous operation device to walk along a straight line for a first preset distance; and
A2, determining whether a steering angle of the autonomous operation device has reached a second preset angle; in the case that the steering angle of the autonomous operation device has reached the second preset angle, determining that the autonomous operation device has completed the steering action; and in the case that the steering angle of the autonomous operation device has not reached the second preset angle, returning to step A1, where
the second preset angle is greater than the first preset angle.

In an embodiment, the first preset angle is not greater than 1/2 of the second preset angle.

In an embodiment, the first preset angle is not greater than 1/4 of the second preset angle.

In an embodiment, the first preset distance is not greater than 5 cm.

In an embodiment, the first preset distance is not greater than 1 cm.

In an embodiment, in step A1, driving the autonomous operation device to walk along the straight line for the first preset distance includes:
determining whether the autonomous operation device is allowed to walk forward;
in the case that the autonomous operation device is allowed to walk forward, driving the autonomous operation device to walk forward along the straight line for the first preset distance; and
in the case that the autonomous operation device is not allowed to walk forward, driving the autonomous operation device to walk backward along the straight line for the first preset distance.

In an embodiment, in controlling the autonomous operation device to perform the steering action according to the first steering strategy, before step A1, the control method further includes:
A0, driving the autonomous operation device to walk backward for a second preset distance to another position on the work surface with a slope less than the preset slope threshold.

In an embodiment, the autonomous operation device includes a first driving wheel and a second driving wheel symmetrically arranged on left and right sides of the autonomous operation device; and
controlling the autonomous operation device to perform the steering action according to the first steering strategy includes:
controlling the first driving wheel to enter a released state and controlling the second driving wheel to rotate forward, where the first driving wheel in the released state is applied with neither braking force nor driving force, and on the work surface where the autonomous operation device is located, a slope height where the first driving wheel is located is higher than a slope height where the second driving wheel is located.

In an embodiment, controlling the autonomous operation device to perform the steering action according to the second steering strategy includes: controlling the autonomous operation device to directly steer to a target angle, and determining that the autonomous operation device has completed the steering action.

In an embodiment, the autonomous operation device further includes a second sensing unit, and the second sensing unit includes a boundary line sensor and/or an obstacle sensor; and the method further includes:
determining that the autonomous operation device needs to perform the steering action in response to receiving a first warning signal or a second warning signal,
where the first warning signal is a signal indicating that the autonomous operation device is about to touch a boundary line of a preset working region as sensed by the boundary line sensor, and the second warning signal is a signal indicating that the autonomous operation device is about to touch an obstacle as sensed by the obstacle sensor.

In an embodiment, the first sensing unit is a slope sensor; and the slope signal is configured to indicate the slope of the work surface where the autonomous operation device is located as sensed by the slope sensor.

### BRIEF DESCRIPTION OF THE DRAWINGS

FIG. 1 is a schematic flowchart of a control method for an autonomous operation device according to a first embodiment of the present disclosure;
FIG. 2 is a schematic flowchart of a control method for an autonomous operation device according to a second embodiment of the present disclosure;
FIG. 3 is a schematic flowchart of sub-steps of step 2032 according to the second embodiment of the present disclosure;
FIG. 4 is a schematic flowchart of a control method for an autonomous operation device according to a third embodiment of the present disclosure;
FIG. 5 is a schematic structural diagram of an autonomous operation system according to a fourth embodiment of the present disclosure; and
FIG. 6 is a schematic structural diagram of an autonomous operation device according to the fourth embodiment of the present disclosure.

### DETAILED DESCRIPTION

The embodiments of the present disclosure will be described in detail below with reference to the accompanying drawings, such that the objectives, features, and advantages of the present disclosure can be understood more clearly. It should be understood that the embodiments shown in the accompanying drawings are not intended to limit the scope of the present disclosure, but are merely intended to illustrate the essential spirit of the technical solution of the present disclosure.

In the following description, for the purposes of explanation, some specific details are set forth in order to provide a thorough understanding of the various disclosed embodiments. However, those skilled in the related art will recognize that an embodiment can be practiced without one or more of the specific details. In other instances, well-known apparatuses, structures, and techniques associated with the present disclosure may not be shown or described in detail to avoid unnecessarily obscuring the description of the embodiments. Unless the context requires otherwise, throughout the specification and claims, the words "comprise", "include", and variations thereof, such as "comprises", "comprising", "includes", and "including", should be understood as having an open and inclusive meaning, that is, should be interpreted as "includes, but is not limited to".

Throughout this specification, reference to "one embodiment" or "an embodiment" means that a particular feature, structure, or characteristic described with reference to an embodiment is included in at least one embodiment. Thus, appearances of the phrase "in one embodiment" or "in an embodiment" at various positions throughout this specification do not necessarily all refer to the same embodiment. In addition, particular features, structures, or characteristics may be combined in any manner in one or more embodiments.

As used in this specification and the appended claims, the singular forms "a/an" and "the" include plural references, unless otherwise specified clearly in the context. It should be noted that the term "or" is generally used as a meaning of "or/and", unless otherwise specified clearly in the context.

For the purpose of clearly illustrating a structure and an operation mode of the present disclosure, various directional terms are used in the following description, but the terms "front", "rear", "left", "right", "outer", "inner", "outward", "inward", "upper", "lower", and the like should be interpreted as convenient expressions and should not be interpreted as limiting terms.

A first embodiment of the present disclosure relates to a control method for an autonomous operation device, which is applied to an autonomous operation device. An autonomous operation device is a robot that can autonomously move within a preset region and perform a specific operation, typically such as an intelligent sweeper/vacuum cleaner performing a cleaning operation, or an intelligent lawn mower performing a lawn mowing operation. Taking a rear-wheel-driven intelligent lawn mower as an example, when the on-site operation ground of the intelligent lawn mower is on a slope and a turn is required, for example, when the intelligent lawn mower is about to touch a boundary line located at a downhill position of a working region and needs to turn, or when the intelligent lawn mower encounters an obstacle located at a downhill position and needs to turn, inconsistent slopes of work surfaces where left and right driving wheels are located may cause inconsistent grips on the ground. The driving wheel with less grip on the ground is prone to slipping, resulting in grass grinding. For a front-wheel-driven intelligent lawn mower, a similar situation may occur when the intelligent lawn mower is close to a boundary line or an obstacle located at an uphill position.

In this embodiment, a first sensing unit is provided in the autonomous operation device, and the first sensing unit is configured to sense a slope of a work surface where the autonomous operation device is located. The first sensing unit is, for example, a slope sensor. A slope signal sensed by the first sensing unit is configured to indicate the slope of the work surface where the autonomous operation device is located as sensed by the slope sensor.

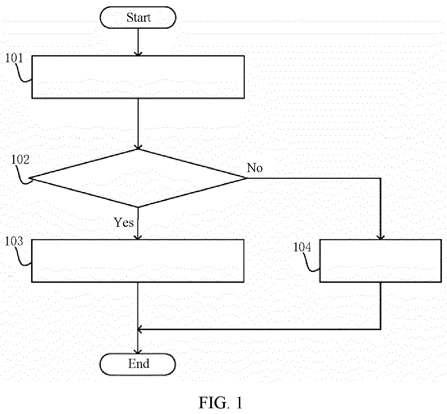

FIG. 1 is a detailed flowchart of the control method for an autonomous operation device in this embodiment.

In step 101, it is determined that the autonomous operation device needs to perform a steering action in response to receiving a first warning signal or a second warning signal.

Specifically, a second sensing unit is further provided in the autonomous operation device, and the second sensor includes a boundary line sensor and/or an obstacle sensor. That is, only one of the boundary sensor and the obstacle sensor may be provided in the autonomous operation device, or both the boundary sensor and the obstacle sensor may be provided in the autonomous operation device (this is taken as an example hereinafter).

During operation of the autonomous operation device, the boundary sensor and the obstacle sensor work according to set working modes, such as according to preset periods. The signal detection periods of the boundary sensor and the obstacle sensor may be the same or different. The boundary sensor can sense whether a boundary line exists within a forward range of the autonomous operation device, and issue the first warning signal when sensing a boundary line within the forward range, where the first warning signal is a signal indicating that the autonomous operation device is about to touch a boundary line of a preset working region as sensed by the boundary line sensor. The obstacle sensor can sense whether an obstacle exists within a forward range of the autonomous operation device, and issue the second warning signal when sensing an obstacle within the forward range, where the second warning signal is a signal indicating that the autonomous operation device is about to touch an obstacle as sensed by the obstacle sensor.

When the autonomous operation device receives the first warning signal or the second warning signal, it is determined that the autonomous operation device needs to perform the steering action, to prevent the autonomous operation device from touching the boundary line or the obstacle.

In step 102, it is determined, based on the slope signal sensed by the first sensing unit, whether the slope of the work surface where the autonomous operation device is currently located exceeds a preset slope threshold. If the slope of the work surface where the autonomous operation device is currently located exceeds the preset slope threshold, step 103 is executed; and if the slope of the work surface where the autonomous operation device is currently located does not exceed the preset slope threshold, step 104 is executed.

Specifically, when needing to steer, the autonomous operation device may immediately control the first sensing unit to sense the slope once, receive the slope signal indicating the slope of the work surface where the autonomous operation device is currently located transmitted by the first sensing unit, and acquire the slope of the work surface where the autonomous operation device is currently located from the slope signal. Alternatively, the first sensing unit senses the slope periodically according to a set working period, and the autonomous operation device may acquire the slope of the work surface where the autonomous operation device is currently located from the most recently received slope signal.

Subsequently, the autonomous operation device compares the slope of the work surface where the autonomous operation device is currently located with the preset slope threshold, and determines, according to a comparison result, a steering strategy to control the autonomous operation device to perform steering.

In step 103, the autonomous operation device is controlled to perform the steering action according to a first steering strategy.

Specifically, if the slope of the work surface where the autonomous operation device is currently located is greater than the preset slope threshold, the autonomous operation device is controlled to perform the steering action according to the first steering strategy, which can avoid the impact of the large slope on the steering of the autonomous operation device.

In step 104, the autonomous operation device is controlled to perform the steering action according to a second steering strategy.

Specifically, if the slope of the work surface where the autonomous operation device is currently located is less than or equal to the preset slope threshold, it is indicated that the work surface where the autonomous operation device is currently located has a small slope or is a flat surface. In this case, the left and right driving wheels of the autonomous operation device have comparable or minimally different grips on the ground, such that slipping of the left and right driving wheels is insignificant, and conventional direct steering can be adopted. The second steering strategy adopted in this case is to control the autonomous operation device to directly steer. When the steering of the autonomous operation device reaches a target angle, it is determined that the autonomous operation device has completed the steering action. Subsequently, the autonomous operation device may continue to move in the preset working region without touching a boundary line or an obstacle.

It should be noted that the above process describes the steering process of the autonomous operation device only once. The autonomous operation device may use the above control method to complete steering each time steering is required.

A second embodiment of the present disclosure relates to a control method for an autonomous operation device. Compared with the first embodiment, a major improvement of this embodiment is that: a specific embodiment of controlling the autonomous operation device to perform the steering action according to the first steering strategy is provided in this embodiment.

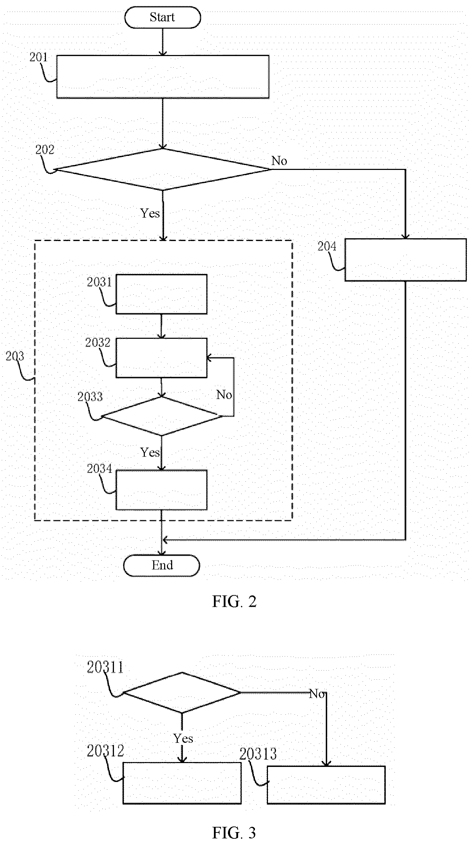

A detailed flowchart of the control method for an autonomous operation device in this embodiment is shown in FIG. 2.

In step 201, it is determined that the autonomous operation device needs to perform a steering action in response to receiving a first warning signal or a second warning signal. This is substantially the same as step 101 in the first embodiment, and will not be repeated here.

In step 202, when the autonomous operation device needs to perform the steering action, it is determined, based on a slope signal sensed by a first sensing unit, whether a slope of a work surface where the autonomous operation device is currently located exceeds a preset slope threshold. If the slope of the work surface where the autonomous operation device is currently located exceeds the preset slope threshold, step 203 is executed; and if the slope of the work surface where the autonomous operation device is currently located does not exceed the preset slope threshold, step 204 is executed. This is substantially the same as step 102 in the first embodiment, and will not be repeated here.

Step 203 of controlling the autonomous operation device to perform the steering action according to the first steering strategy includes the following sub-steps.

In sub-step 2031, the autonomous operation device is driven to walk backward for a second preset distance to another position on the work surface with a slope less than the preset slope threshold.

Specifically, the slope of the work surface on which the autonomous operation device operates is not uniform. The slope sensor in the autonomous operation device periodically senses the slope of the work surface where the autonomous operation device is located, and the autonomous operation device records slope changes of the work surface where the autonomous operation device is located over a period of time.

When performing the steering action according to the first steering strategy, the autonomous operation device retrieves the recorded slope data, selects from the recorded slope data the other position with the slope less than the preset slope threshold, and acquires a distance (i.e., the second preset distance) between the current position and the other position, where the second preset distance indicates a distance traveled by the autonomous operation device when it walks from the other position to the current position. Then, the autonomous operation device is driven to walk backward for the second preset distance to the other position on the work surface with the slope less than the preset slope threshold during this period of time. In this case, the slope of the work surface where the autonomous operation device is located is less than the preset slope threshold. As the autonomous operation device walks to the work surface with the small slope, the driving wheels are enabled to regain sufficient grips on the ground, which is more suitable for driving the autonomous operation device to perform the steering action. In this embodiment, the second preset distance is less than or equal to 5 cm. In some examples, the second preset distance is less than or equal to 1 cm. In some examples, the second preset distance may also vary in real time according to on-site conditions.

In sub-step 2032, the autonomous operation device is driven to steer at a first preset angle, and then the autonomous operation device is driven to walk along a straight line for a first preset distance.

In sub-step 2033, it is determined whether a steering angle of the autonomous operation device has reached a second preset angle. If the steering angle of the autonomous operation device has reached the second preset angle, sub-step 2034 is executed to determine that the autonomous operation device has completed the steering action. If the steering angle of the autonomous operation device has not reached the second preset angle, the process returns to sub-step 2032.

Specifically, the first steering strategy is that the autonomous operation device completes the steering action through a plurality of times of small-angle steering. That is, the autonomous operation device first steers at the first preset angle and walks for the first preset distance. Then, it is determined whether the steering angle of the autonomous operation device has reached the second preset angle. If the steering angle of the autonomous operation device has not reached the second preset angle, the autonomous operation device is driven again to continue steering at the first preset angle and walking for the first preset distance, and it is determined whether the steering angle of the autonomous operation device has reached the second preset angle. This is repeated for a plurality of times until the steering angle of the autonomous operation device reaches the second preset angle, at which point it is determined that the autonomous operation device has completed the steering action.

In the first steering strategy, the second preset angle is greater than the first preset angle, that is, the first preset angle is a small angle relative to the second preset angle, and the second preset angle is a large angle that needs to be reached by the autonomous operation device to complete steering. Through a plurality of times of small-angle steering, the grips of the driving wheels on the ground are enhanced when the autonomous operation device turns at a downhill position, thereby preventing the driving wheels from slipping that could cause grass grinding.

In order to maximize the smoothness of the autonomous operation device turning at a downhill position and prevent the driving wheels of the autonomous operation device from slipping, the magnitude of the first preset angle and the length of the first preset distance are set based on the slope of the actual work surface. In some examples, the first preset angle is less than or equal to 1/2 of the second preset angle, and the first preset distance is less than or equal to 5 cm. In other examples, the first preset angle is less than or equal to 1/4 of the second preset angle, and the first preset distance is less than or equal to 1 cm.

In some examples, as shown in FIG. 3, driving the autonomous operation device to walk along the straight line for the first preset distance in sub-step 2032 further includes the following sub-steps.

In sub-step 20311, it is determined whether the autonomous operation device is allowed to walk forward.

In sub-step 20312, if the autonomous operation device is allowed to walk forward, the autonomous operation device is driven to walk forward along the straight line for the first preset distance.

In sub-step 20313, if the autonomous operation device is not allowed to walk forward, the autonomous operation device is driven to walk backward along the straight line for the first preset distance.

Specifically, before the autonomous operation device is driven to walk forward, the boundary line sensor and the obstacle sensor in the autonomous operation device may pre-assess the action of walking forward. If the boundary line senses that the autonomous operation device is about to touch the boundary line of the preset working region and would move out of the boundary if it continues to walk forward, it will be determined that the autonomous operation device is not allowed to walk forward. Alternatively, if the obstacle sensor senses that the autonomous operation device is about to touch an obstacle and would hit the obstacle if it continues to walk forward, it will also be determined that the autonomous operation device is not allowed to walk forward.

When the autonomous operation device encounters the above two or other similar situations where forward walking is not allowed, the autonomous operation device is not allowed to walk forward. In such cases, the autonomous operation device is first driven to walk backward along the straight line for the first preset distance, to prevent the autonomous operation device from moving out of the boundary or touching the obstacle, which could cause damage. In this embodiment, the first preset distance is less than or equal to 5 cm. In some examples, the first preset distance is less than or equal to 1 cm.

When the autonomous operation device does not encounter the above two or other similar situations where forward walking is not allowed, the autonomous operation device is allowed to walk forward. The autonomous operation device is driven to walk forward along the straight line for the first preset distance, and then sub-step 1032 is executed to determine whether the steering angle of the autonomous operation device has reached the second preset angle.

In this embodiment, when the slope of the work surface where the autonomous operation device is currently located is greater than the preset slope threshold, the autonomous operation device is controlled to perform the steering action according to the first steering strategy. The first steering strategy involves stopping walking first, rotating by a small angle in place, and then continuing walking. In this way, the steering action is completed through a plurality of times of small-angle steering. Through a plurality of times of small-angle steering combined with straight-line walking, the original sharp angular-like steering angle of the autonomous operation device is progressively moderated, so as to enhance the grips of the driving wheels on the ground each time the autonomous operation device steers at a small angle, thereby preventing grass slipping caused by slipping of the driving wheels.

In step 204, if the slope of the work surface where the autonomous operation device is currently located is less than or equal to the preset slope threshold, the autonomous operation device is controlled to perform steering according to a second steering strategy. This is substantially the same as step 104 in the first embodiment, and will not be repeated here.

A third embodiment of the present disclosure relates to a control method for an autonomous operation device. Compared with the first embodiment, a major improvement of this embodiment is that: another specific embodiment of controlling the autonomous operation device to perform the steering action according to the first steering strategy is provided in this embodiment.

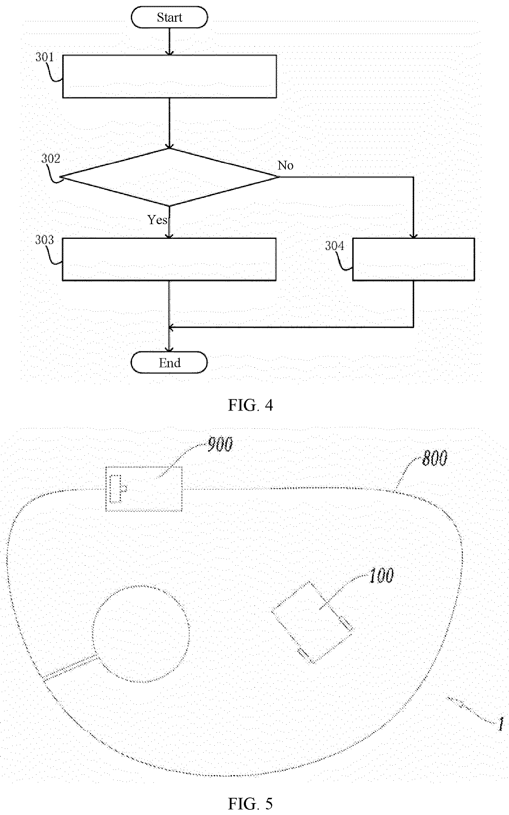

A detailed flowchart of the control method for an autonomous operation device in this embodiment is shown in FIG. 4.

In step 301, it is determined that the autonomous operation device needs to perform a steering action in response to receiving a first warning signal or a second warning signal. This is substantially the same as step 101 in the first embodiment, and will not be repeated here.

In step 302, when the autonomous operation device needs to perform the steering action, it is determined, based on a slope signal sensed by a first sensing unit, whether a slope of a work surface where the autonomous operation device is currently located exceeds a preset slope threshold. This is substantially the same as step 102 in the first embodiment, and will not be repeated here.

In step 303, if the slope of the work surface where the autonomous operation device is currently located is greater than the preset slope threshold, a first driving wheel is controlled to enter a released state and a second driving wheel is controlled to rotate forward, where the first driving wheel in the released state is applied with neither braking force nor driving force, and on the work surface where the autonomous operation device is located, a slope height where the first driving wheel is located is higher than a slope height where the second driving wheel is located.

Specifically, the first driving wheel and the second driving wheel are symmetrically arranged on left and right sides of the autonomous operation device, and the first driving wheel and the second driving wheel are separately connected to an output shaft of a walking prime mover of the autonomous operation device via a clutch apparatus. In this embodiment, the work surface where the autonomous operation device is located is a downward slope. The autonomous operation device would touch the boundary line located at a downhill position if it continues to walk forward, and needs to steer to avoid moving out of the boundary. The first driving wheel is located on the left side, the second driving wheel is located on the right side, and the slope height where the first driving wheel on the left side is located is higher than the slope height where the second driving wheel on the right side is located. In this case, since the two driving wheels are located at different slope heights, the second driving wheel on the right side has a large grip on the ground, and the first driving wheel on the left side has a small grip on the ground. If the device directly steers, the first driving wheel on the left side may experience grass slipping due to the small grip on the ground. In this embodiment, the first driving wheel on the left side is controlled to enter the released state, and the second driving wheel on the right side is controlled to rotate forward from the current position, causing the autonomous operation device to steer to the left. The first driving wheel in the released state is applied with neither braking force nor driving force. That is, the clutch apparatus is controlled to disengage the first driving wheel from the output shaft of the walking prime mover, such that the first driving wheel is in a freely rotational state, and a motor driving shaft of the autonomous operation device provides neither driving force nor braking force to the first driving wheel. By releasing the driving wheel with a smaller grip on the ground and allowing it to rotate freely, steering on the slope is achieved, avoiding grass slipping of the driving wheel with the smaller grip.

It should be noted that scenarios requiring steering of the autonomous operation device further include encountering an obstacle. When an obstacle appears within a forward range of the autonomous operation device, the autonomous operation device would touch the obstacle if it continues to walk forward. In this case, the control method for the first driving wheel and the second driving wheel in the autonomous operation device is the same as that described above, which is not repeated here.

In step 304, if the slope of the work surface where the autonomous operation device is currently located is less than or equal to the preset slope threshold, the autonomous operation device is controlled to perform steering according to a second steering strategy. This is substantially the same as step 104 in the first embodiment, and will not be repeated here.

As shown in FIG. 5, a fourth embodiment of the present disclosure relates to an autonomous operation system 1 including an autonomous operation device 100, a docking station 900, and a boundary 800.

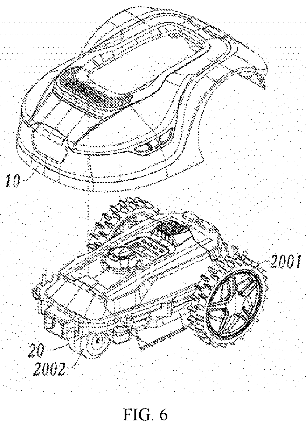

The autonomous operation device 100 is, in particular, a robot that can autonomously move within a preset region and perform a specific operation, typically such as an intelligent sweeper/vacuum cleaner performing a cleaning operation, or an intelligent lawn mower performing a lawn mowing operation. The specific operation, in particular, refers to an operation that processes a work surface and changes the state of the work surface. The present disclosure is described in detail by taking an intelligent lawn mower as an example. The autonomous operation device 100 can autonomously walk on the surface of a working region, and in particular, as an intelligent lawn mower, can autonomously perform a lawn mowing operation on the ground. The autonomous operation device 100 at least includes a main body mechanism, a moving mechanism, a working mechanism, an energy module, a detection module, an interaction module, a control module, and the like. The control module is configured to perform the control method in the first embodiment or the second embodiment. As shown in FIG. 6, the main body mechanism typically includes a chassis 20 and a housing 10. The chassis 20 is configured to install and accommodate functional mechanisms and functional modules, such as the moving mechanism, the working mechanism, the energy module, the detection module, the interaction module, and the control module. The housing 10 is typically configured to at least partially cover the chassis 20, primarily for enhancing the aesthetics and recognizability of the autonomous operation device 100. In this embodiment, the housing 10 is configured to be capable of resettable translation and/or rotation relative to the chassis 20 under an external force. In cooperation with a suitable detection module, such as a Hall sensor, the housing can further serve to detect events like collisions and lifting.

The moving mechanism is configured to support the main body mechanism on the ground and drive the main body mechanism to move on the ground, and generally includes a wheeled moving mechanism, a tracked or semi-tracked moving mechanism, a walking moving mechanism, or the like. In this embodiment, the moving mechanism is a wheeled moving mechanism, including at least one driving wheel 2001 and at least one walking prime mover.

The walking prime mover is preferably a motor, and in other embodiments, the walking prime mover may be an internal combustion engine or a machine that uses other types of energy sources to generate power. In this embodiment, the walking prime mover is preferably provided with a left driving wheel, a left walking prime mover that drives the left driving wheel, a right driving wheel, and a right walking prime mover that drives the right driving wheel. In this embodiment, the straight-line movement of the autonomous operation device is achieved by the equidirectional and constant-speed rotation of the left and right driving wheels, and the steering movement is achieved by the equidirectional and differential-speed rotation or the opposite-direction rotation of the left and right driving wheels. In other embodiments, the moving mechanism may further include a steering mechanism independent of the driving wheels and a steering prime mover independent of the walking prime mover. In this embodiment, the moving mechanism further includes at least one driven wheel 2002, typically configured as a universal wheel. The driving wheel 2001 and the driven wheel 2002 are located at the front and rear ends of the autonomous operation device, respectively.

The working mechanism is configured to perform a specific operational task and includes a working component and a working prime mover driving the working component to operate. Exemplarily, for an intelligent sweeper/vacuum cleaner, the working component includes a roller brush, a dust suction pipe, a dust collection chamber, and the like; for an intelligent lawn mower, the working component includes a cutting blade or a cutting deck, and further includes other components for optimizing or adjusting the mowing effect, such as a height adjustment mechanism for adjusting the mowing height. The working prime mover is preferably a motor, and in other embodiments, the working prime mover may be an internal combustion engine or a machine that uses other types of energy sources to generate power. In some other embodiments, the working prime mover and the walking prime mover 110 are configured as the same prime mover.

The energy module is configured to provide energy for various tasks of the autonomous operation device 100. In this embodiment, the energy module includes a battery and a charging connection structure. The battery is preferably a rechargeable battery, and the charging connection structure is preferably a charging electrode that may be exposed outside the autonomous operation device.

The detection module is configured as at least one sensor that senses an environmental parameter or a working parameter of the autonomous operation device 100. Typically, the detection module may include sensors related to the definition of the working region, such as magnetic induction, collision, ultrasonic, infrared, radio, and various types. The types of sensors are adapted to the position and number of the corresponding signal generation apparatuses. The detection module may further include positioning navigation-related sensors such as GPS positioning apparatuses, laser positioning apparatuses, electronic compasses, acceleration sensors, odometers, angle sensors, and geomagnetic sensors. The detection module may further include sensors related to its own working safety, such as an obstacle sensor, a lifting sensor, and a battery pack temperature sensor. The detection module may further include sensors related to an external environment, such as an ambient temperature sensor, an ambient humidity sensor, a light sensor, and a rain sensor.

The interaction module is configured at least to receive control instruction information inputted by a user, transmit information requiring user perception, and communicate with other systems or devices to transmit and receive information. In this embodiment, the interaction module includes an input apparatus arranged on the autonomous operation device 100 for receiving control instruction information inputted by a user, typically such as a control panel and an emergency stop key. The interaction module further includes a display screen, an indicator light, and/or a buzzer arranged on the autonomous operation device 100, enabling a user to perceive information through light or sound. In other embodiments, the interaction module includes a communication module arranged on the autonomous operation device 100 and a terminal device independent of the autonomous operation device 100, such as a mobile phone, a computer, or a network server. User control instruction information or other information may be inputted on the terminal device and reach the autonomous operation device 100 via a wired or wireless communication module.

The control module typically includes at least one processor and at least one non-volatile memory. The memory stores a pre-written computer program or an instruction set, and the processor, according to the computer program or the instruction set, controls the performance of movements, work, and the like of the autonomous operation device 100. Further, the control module can also control and adjust the corresponding actions of the autonomous operation device 100 and modify parameters in the memory according to a signal from the detection module and/or a user control instruction.

The boundary 800 is configured to define a working region of the robotic system and typically includes an outer boundary 8001 and an inner boundary 8002. The autonomous operation device 100 is constrained to moving and working within the outer boundary 8001, outside the inner boundary 8002, or between the outer boundary 8001 and the inner boundary 8002. The boundary may be solid, typically such as a wall, fence, or railing; the boundary may also be virtual, typically such as a virtual boundary signal issued by a boundary signal generation apparatus, which is usually an electromagnetic signal or an optical signal, or a virtual boundary set in an electronic map, for example formed by two-dimensional or three-dimensional coordinates, for an autonomous operation device 100 provided with a positioning apparatus (such as GPS). In this embodiment, the boundary 800 is configured as a closed conductive wire that is electrically connected to the boundary signal generation apparatus which is typically arranged in the docking station 900.

The docking station 900 is typically configured on the boundary 800 or within the boundary 800 for the autonomous operation device 100 to dock, especially for supplying energy to the autonomous operation device 100 docked at the docking station.

The preferred embodiments of the present disclosure have been described in detail above. However, it should be understood that an aspect of the embodiments can be modified, if necessary, to employ aspects, features, and concepts of various patents, applications and publications to provide another embodiment.

These and other modifications can be made to the embodiments based on the detailed description described above. Generally, in the claims, the terms used should not be construed to be limited to the specific embodiments disclosed in this specification and the claims, but should be construed to include all possible embodiments along with the full scope of equivalents to which such claims are entitled.

## Claims

1. A control method for an autonomous operation device, wherein the control method is applied to an autonomous operation device, and the autonomous operation device comprises a first sensing unit, and the method comprises:
in a case that the autonomous operation device needs to perform a steering action, determining, based on a slope signal sensed by the first sensing unit, whether a slope of a work surface where the autonomous operation device is currently located exceeds a preset slope threshold;
in a case that the slope of the work surface where the autonomous operation device is currently located is greater than the preset slope threshold, controlling the autonomous operation device to perform the steering action according to a first steering strategy; and
in a case that the slope of the work surface where the autonomous operation device is currently located is less than or equal to the preset slope threshold, controlling the autonomous operation device to perform the steering action according to a second steering strategy.

2. The control method for an autonomous operation device according to claim 1, wherein controlling the autonomous operation device to perform the steering action according to the first steering strategy comprises:
A1, driving the autonomous operation device to steer at a first preset angle, and then driving the autonomous operation device to walk along a straight line for a first preset distance; and
A2, determining whether a steering angle of the autonomous operation device has reached a second preset angle; in a case that the steering angle of the autonomous operation device has reached the second preset angle, determining that the autonomous operation device has completed the steering action; and in a case that the steering angle of the autonomous operation device has not reached the second preset angle, returning to step A1, wherein
the second preset angle is greater than the first preset angle.

3. The control method for an autonomous operation device according to claim 2, wherein the first preset angle is not greater than 1/2 of the second preset angle.

4. The control method for an autonomous operation device according to claim 2, wherein the first preset angle is not greater than 1/4 of the second preset angle.

5. The control method for an autonomous operation device according to claim 2, wherein the first preset distance is not greater than 5 cm.

6. The control method for an autonomous operation device according to claim 2, wherein the first preset distance is not greater than 1 cm.

7. The control method for an autonomous operation device according to claim 2, wherein in step A1, driving the autonomous operation device to walk along the straight line for the first preset distance comprises:
determining whether the autonomous operation device is allowed to walk forward;
in a case that the autonomous operation device is allowed to walk forward, driving the autonomous operation device to walk forward along the straight line for the first preset distance; and
in a case that the autonomous operation device is not allowed to walk forward, driving the autonomous operation device to walk backward along the straight line for the first preset distance.

8. The control method for an autonomous operation device according to claim 2, wherein in controlling the autonomous operation device to perform the steering action according to the first steering strategy, before step A1, the control method further comprises:
A0, driving the autonomous operation device to walk backward for a second preset distance to another position on the work surface with a slope less than the preset slope threshold.

9. The control method for an autonomous operation device according to claim 1, wherein the autonomous operation device comprises a first driving wheel and a second driving wheel symmetrically arranged on left and right sides of the autonomous operation device; and
controlling the autonomous operation device to perform the steering action according to the first steering strategy comprises:
controlling the first driving wheel to enter a released state and controlling the second driving wheel to rotate forward, wherein the first driving wheel in the released state is applied with neither braking force nor driving force, and on the work surface where the autonomous operation device is located, a slope height where the first driving wheel is located is higher than a slope height where the second driving wheel is located.

10. The control method for an autonomous operation device according to claim 1, wherein controlling the autonomous operation device to perform the steering action according to the second steering strategy comprises:
controlling the autonomous operation device to directly steer to a target angle, and determining that the autonomous operation device has completed the steering action.

11. The control method for an autonomous operation device according to claim 1, wherein the autonomous operation device further comprises a second sensing unit, and the second sensing unit comprises a boundary line sensor and/or an obstacle sensor; and
the method further comprises:
determining that the autonomous operation device needs to perform the steering action in response to receiving a first warning signal or a second warning signal,
wherein the first warning signal is a signal indicating that the autonomous operation device is about to touch a boundary line of a preset working region as sensed by the boundary line sensor, and the second warning signal is a signal indicating that the autonomous operation device is about to touch an obstacle as sensed by the obstacle sensor.

12. The control method for an autonomous operation device according to claim 1, wherein the first sensing unit is a slope sensor; and the slope signal is configured to indicate the slope of the work surface where the autonomous operation device is located as sensed by the slope sensor.

13. A non-transitory computer-readable storage medium having stored thereon processor-executable instructions, wherein the executable instructions are configured to enable a processor of an autonomous operation device to perform the control method according to any one of claims 1 to 12.

14. An autonomous operation device, configured to perform the control method for an autonomous operation device according to any one of claims 1 to 12, or comprising the non-transitory computer-readable storage medium according to claim 13.
